# EUROPÄISCHE PATENTANMELDUNG

(11) **EP 0 905 960 A1**
(43) Veröffentlichungstag der Anmeldung: **31.03.1999**
(21) Anmeldenummer: 97113667.6
(22) Anmeldetag: 07.08.1997
(51) Int. Cl.: H04M 15/00, H04M 15/28

(54) **Verfahren zur Berechnung von Kommunikationsdiensten**

(71) Anmelder: SIEMENS AKTIENGESELLSCHAFT, 80333 München (DE)
(72) Erfinder: Hamann, Jan, Dipl.-Ing., 81249 München (DE); Huyghe, Carlos, Dipl.-Ing., 9840 De Pinte (BE); Pucher, Werner, 1100 Wien (AT)

(57) **Zusammenfassung**

Nach der Erfindung werden die für die Gebührenanzeige in einem Netzknoten verbindungsbezogen berechneten Gebühren in einen Gebührendatensatz aufgenommen, der zur späteren Gebühren-Verrechnung herangezogen wird. Dadurch entfällt die Notwendigkeit einer konsistenten Tarifdatenhaltung zwischen der Vermittlungsstelle für die Berechnung der Gebührenanzeige und dem VST-externen Billing-System für die Rechnungserstellung.

## Beschreibung

Drei Trends bilden das Umfeld der Erfindung.
1. In den stark expandierenden Telekommunikationsmarkt treten eine Vielzahl neuer Netzbetreiber und Diensteanbieter ein, deren Auseinandersetzung im Wettbewerb hauptsächlich über die Tarifgestaltung für angebotene Dienste geführt wird. Dieser Trend führt dazu, daß Nutzer von Telekommunikationsdiensten mit einer kaum noch überschaubaren Vielzahl von Tarifen 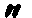 überflutet" werden, die sich sehr kurzfristig ändern können. Derzeit ist der Haupttreiber für diesen Trend das revolutionär expandierende Internet und das mit ihm wachsende Angebot an kommerziellen Dienstleistungen über Telekommunikationsnetze.
2. Die Auseinandersetzung über die Tarife wird in zunehmendem Maße dazu führen, daß die Zeitintervalle für zu verrechnende Gebühreneinheiten immer kürzer werden, so daß zunehmend eine sekundengenaue Abrechnung der Inanspruchnahme von Telekommunikationsdiensten erfolgen wird, zumindestens zwischen Netzbetreiber und Dienstanbieter. Im Mobilfunkmarkt hat der Tarifwettbewerb schon die sekundengenaue Abrechnung erzwungen. In der hauptsächlich durch das Internet getriebenen Revolutionierung des Festnetzes wird diese Entwicklung nachvollzogen werden (netzinterne und netzexterne Billingsysteme werden hierfür mit entsprechenden Eigenschaften 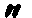 ausgerüstet" und integriert werden müssen).
3. Durch die gleichzeitig stark zunehmende Anzahl von Diensten, tritt zunehmend die Notwendigkeit auf, diese Telekommunikationsdienste direkt vor deren Inanspruchnahme auszupreisen ( 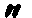 Was wird der Dienst kosten?") und/oder die angefallenen Gebühren direkt nach Inanspruchnahme des Dienstes auszuweisen.

Ersteres dient in Deutschland z.B. der gesetzlich vorgeschriebenen Preisauszeichnungspflicht, letzteres wird zunehmend notwendig für direkt abzurechnende Telekommunikationsdienstleistungen wie z.B. Benutzung eines Telefons im Taxi, Nutzung von 'Video on Demand' im Hotel oder auch Nutzung von Internet-Dienstleistungen am PC in einem Internet-Cafe.

Beim gegenwärtigen Stand der im Einsatz befindlichen Technik übermittelt die Vermittlungsstelle hauptsächlich Anzahl und Dauer von Verbindungen an die sogenannte Gebühren-Nachverarbeitung, die unabhängig von den in der Vermittlungsstelle zum Zweck der Gebührenanzeige ermittelten Gebühren selbstständig Gebühren für die Rechnungserstellung errechnet. Durch Abweichungen in den zur Berechnung verwendeten Zeitbasen können so Inkonsistenzen auftreten, die zu Differenzen zwischen angezeigten und in Rechnung gestellten Gebühren führen können.

Eine weitere, wirtschaftlich stärker ins Gewicht fallende Tatsache ist, daß beim gegenwärtigen Stand der Technik
a) mehrere (mindestens 2) Tarifdatenbasen konsistent gehalten werden müssen (die Tarifdatenbasis der VST'n sowie die Tarifdatenbasis des externen Billingcenters für das Gebühren-Postprocessing), und
b) die Algorithmen zur Berechnung der verbindungsbezogenen Gebühren zwischen VST'n und externem Billingcenter konsistent gehalten werden müssen.

Besonders im oben geschilderten Wettbewerbsumfeld wird
a) die Tarifierung zunehmend flexibler sein müssen, d.h. schnellere Änderungen der Tarife ermöglichen sowie die Flexibilisierung der Tarife als solche durch Einführung bzw. Anwendung von Tarifsequenzen ermöglichen, und
b) die Tarifierung mit seinen Algorithmen als innovatives Feld ständigen Änderungen unterliegen, und
c) die Beseitigung von Abweichungen zwischen den auf Sekundenbasis online während des Gespräches ausgewiesenen Gebühren und den auf der Teilnehmerrechnung erscheinenden, verbindungsbezogenen Gebühren eine 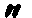 harte" Forderung der Netzbetreiber gegenüber den Netzlieferanten (Equipment-Supplier) sein.

Algorithmen sowie Tarifdaten in der VST unterliegen für die Gebührenanzeige bzw. -ausgabe einer permanenten Aktualisierung. Das ist notwendig z. B. zur Gebührenanzeige, online-Verrechnung von Gebühren in den Endgeräten in einem Hotel oder auch durch ein öffentliches Kartentelefon.

Der Erfindung liegt die Aufgabe zugrunde, ein Verfahren zur Vergebührung anzugeben, durch das die genannten Nachteile vermieden werden können.

Die genannte Aufgabe wird durch ein Verfahren gemäß den Merkmalen von Anspruch 1 gelöst.

Indem die verbindungsbezogenen errechneten Gebühren dem externen Billingcenter (genauer dessen Gebühren-Nachverarbeitungsprogramm) zur Verfügung gestellt werden, kann der Netzbetreiber erhebliche wirtschaftliche Einsparungen durch Wegfall der mehrfachen Konsistenthaltung von Algorithmen und Tarifdatenbasen erzielen. Das externe Billingcenter benötigt in diesem Fall o.g. Tarifdaten und Algorithmen nicht.

Die Erfindung bietet folgende weiteren Vorteile:
- 100%ige Konsistenz zwischen den Gebühren, die während der Verbindung durch die VST errechnet und angezeigt werden, und jenen Gebühren, die durch den Netzbetreiber später mittels Teilnehmerrechnung verrechnet werden (auch wenn ggf. diese angezeigten Gebühren nur ein (extra) auszuweisender Bestandteil der insgesamt verrechneten Gebühren sind),
- Erfassung der Gebühren am Ursprung der zugrunde liegenden Daten,
- keine Notwendigkeit der späteren Berechnung bereits in der Vermittlungsstelle ermittelter Gebühren durch Einsatz eines externen Billing-Systems (sogenanntes Postprocessing),
- keine Notwendigkeit der Implementation, Pflege, Anpassung von Algorithmen zur zeitbezogenen Gebührenberechnung für Telekommunikationsdienste im externen Billing-System,
- Einsparung der konsistenten Tarifdatenhaltung für die Gebührenermittlung, d.h. einerseits der Daten in der Vermittlungsstelle für die Berechnung der Gebührenanzeige und andererseits der Daten des VST-externen Billing-Systems für die Rechnungserstellung.

Im folgenden wird ein Ausführungsbeispiel der Erfindung anhand der Zeichnung näher erläutert.

### Gebührenermittlung, Gebührenausgabe und Gebührenspeicherung

### Vorbemerkung:

Das erfindungsgemäße Verfahren wird anhand einer Realisierung für das Euro-ISDN(DSS1-ISDN) erläutert. Bei dieser Realisierung benötigt der Teilnehmer zur Nutzung des Verfahrens ein ISDN-Endgerät. Das Verfahren ist grundsätzlich jedoch auch dann anwendbar, wenn den Telekommunikationsteilnehmern optisch keine Gebühren angezeigt werden können, ggf. ist dann eine Ansage nach Ende der Verbindung möglich.

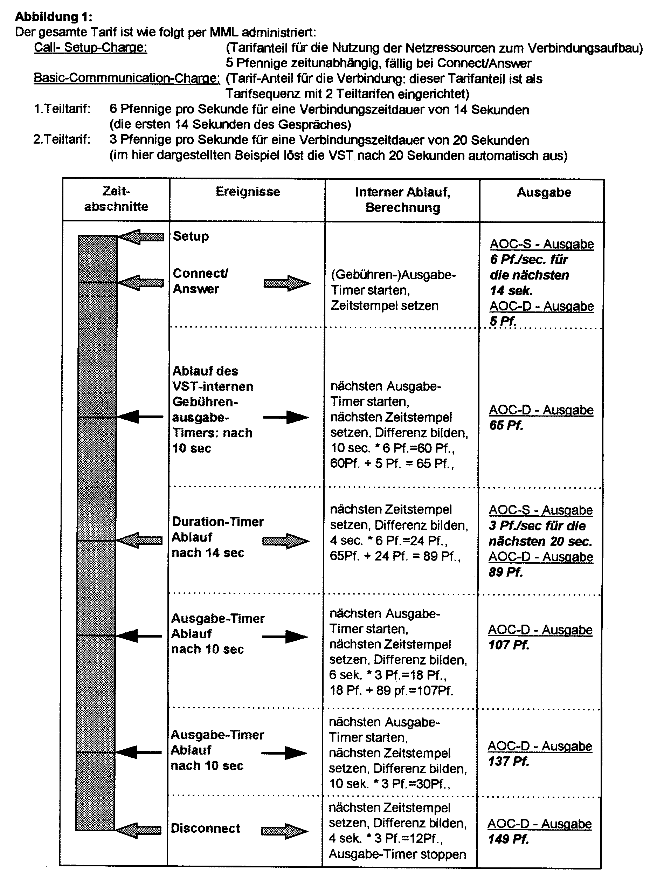

FIG 1 zeigt ein beispielhaftes Vermittlungssystem, das Vermittlungssystem EWSD der Siemens AG, bei dem es sich prinzipiell um ein Multiprozessorsystem handelt. In diesem System wird die Verbindungssteuerung (im folg. auch Call Control genannt) durch den Gruppenprozessor einer "Line Trunk Group" LTG ausgeführt. Diese Verbindungssteuerungs-Software nimmt neben Verbindungsaufbau- und Verbindungsabbau-Aufgaben auch Aufgaben der Gebührenermittlung sowie Signalisierungsaufgaben u.a.für die Gebührenanzeige wahr.

Die Verbindungssteuerung wird zur Ausführung des zu beschreibenden Verfahrens folgende Aufgaben übernehmen:
1) die verbindungsbezogene Ermittlung gebührenrelevanter Daten,
2) die Umrechnung dieser Daten in sekundengenaue Gebühren unter Verwendung von Tarifdaten,
3) die Initiierung der Ausgabe dieser Gebühren durch die Software der Signalisierungs-Subsysteme zur Preisauszeichnung bzw. Gebührenanzeige,
4) die Initiierung der Aufnahme der ermittelten Gebühren in den Gebührendatensatz bzw. das Ticket durch den zentralen Prozessor (Central Processor CP) für die spätere Gebührennachverarbeitung.

Die Tarifdaten werden über eine sogenannte Man Machine Language-Schnittstelle (MML-Interface) im Central Processor CP administriert. Aktuell relevante Tarifdaten werden vom Central Processor (im folg. auch 'CP') dem Gruppenprozessor (im folg. auch 'GP') über ein EWSD-internes Protokoll zur Verfügung gestellt. Aufgrund aktuell ermittelter, verbindungsspezifischer Daten und der Tarifdaten werden die Gebühren berechnet.

Das Call Control steuert u.a. die Gebührendatenermittlung und die Gebührenausgabe zum Teilnehmer sowie die interne Erfassung der ausgegeben Gebühren.

Die Gebührenermittlung wird hauptsächlich durch Ereignisse des Verbindungsauf- und Verbindungsabbaus bestimmt. Weitere Ereignisse sind Ereignisse, die den aktuellen Tarif beeinflussen, wie z.B. zeitgesteuerte Tarifumschaltungen (Nachttarife, Feiertagstarife usw.). Tarifumschaltungen werden i.d.R. vom tarifbestimmenden ("verzonenden") Amt gesteuert.

Ereignisse, die die Gebührenermittlung anstoßen, führen i.d.R. auch zur Gebührenausgabe. Ausnahme bilden Ereignisse vor Durchschaltung des Nutzkanals (Bearer Channels), da sich bis zu dessen Durchschaltung die tarifbestimmenden Faktoren (wie z.B. "B-Party free of Charge", Tarif) noch ändern können.

Die Berechnung der Gebühren erfolgt intervall-gesteuert in zeitlichen Abständen von Sekunden bzw. Minuten, jedoch sekundengenau mit Hilfe von Zeitstempeln, der Berechnung derer Zeitdifferrenzen und tarifabhängigen Bewertung derselben.

Für die Gebührenausgabe bzw. Gebührenanzeige (Advice of Charge, im folg. auch kurz AOC) sind die folgenden Methoden vorgesehen:
- AOC at call setup time (AOC-S),
- AOC cumulative during the call (AOC-D),
- AOC at the end of a call (AOC-E).

Alle drei Ausprägungen sind permanent für den Teilnehmer eingerichtet oder pro Verbindung über das Endgerät durch den Teilnehmer anforderbar.
AOC per Call kann mit Hilfe des funktionalen Protokolls angefordert werden.
Die AOC-Information wird gleichfalls mit Hilfe des funktionalen ISDN-Protokolls zum Teilnehmer (im folgenden auch "User") zurückgesendet.

Die **Gebührenausgabe** wird i.d.R. zu folgenden Ereignissen vorgenommen:
- bei der Anforderung von AOC-S, AOC-D oder AOC-E durch den Teilnehmer,
- beim Ablauf des berechnungsintervall-steuernden Gebührentimers (im folg. auch mit dem Kürzel T3AG benannt),
- beim Auslösen der Verbindung
- und im Interworking mit Features wie z.B. Terminal Portability, Großer Konferenz.

Die **Gebührenspeicherung im Datensatz** erfolgt in einem besonderen Feld des sogenannten AMA Datensatzes (AMA=Automatic Message Accounting). Der AMA Datensatz dient der Speicherung jener Kommunikationsdaten, die für die Erstellung der Teilnehmerrechnung in einem Billing Center benötigt werden. Der AMA Datensatz wird dem Billing Center des Netzbetreibers übermittelt, womit der Betreiber in der Lage ist, die sekundengenau während der Verbindung errechneten und zum Teilnehmer ausgegebenen Gebühren in die Teilnehmerrechnung zu übernehmen. Da erfindungsgemäß die Konsistenz der Gebühren gewährleistet wird, ist der Betreiber also in der Lage, dem Teilnehmer die Rechtssicherheit der ihm übertragenen Gebühren zu garantieren, so daß dieser bereits die angezeigten Gebühren für direkt abrechenbare Dienstleistungen verwenden kann.

### 2. Darstellung der Gebührenermittlung, Gebührenausgabe und Gebührenspeicherung

### 2.1 Administrierung der Tarife

Die Tarifeingabe erfolgt mittels MML-Kommandos und ist im CP realisiert. Die Tarife sind einzelnen Zonenpunkten (für z.B. Entfernungs- und Zeit-Abhängigkeiten) frei zuordenbar. Ein Tarif kann aus folgenden Elementen bestehen:

### * Call Attempt Charge (Verbindungsversuchs-Aufbau-Gebühr):

Diese Gebühr wird bei einem nicht erfolgreichen Verbindungsaufbau fällig. D.h. es wird auf der B-Seite keine CONNECT gesendet. Über einen Tabelleneintrag im GP kann man steuern, bei welchen Auslösegründen (Cause Nr.) diese Gebühr dem User verrechnet wird; z.B. soll bei einem vermittlungsnetz-internen Fehler oder Vermittlungsstellen-Recovery keine Gebühr verrechnet werden, sehr wohl aber z.B. bei "User busy" oder wenn ein Teilnehmer nicht abhebt.

Die Gebührenwerte für die Call Attempt Charge können durch Fließkommadarstellung von 99999,9 bis 0,00001 angegeben werden.

### * Call Setup Charge (Verbindungs-Aufbau-Gebühr):

Wird die Verbindung zum B-Teilnehmer erfolgreich aufgebaut, so wird diese Gebühr bei CONNECT verrechnet. Nicht zu verwechseln ist diese Gebühr mit der ggf. auf Wunsch des Netzbetreibers zu verrechnenden "Minimum Charge". Die Minimum Charge ist im GP realisiert und addiert zu Verbindungsbeginn den Tarif (Basic Communication Charge) für eine Sekunde zu den Verbindungsgebühren, um Mißbrauch des Vermittlungsnetzes zu vermeiden.

Die Gebührenwerte für die Call Setup Charge können durch Fließkommadarstellung von 99999,9 bis 0,00001 angegeben werden.

### * Basic Communication Charge (Verbindungsgebühr)

Das ist der Tarif für die Verbindungsgebühr von einer Sekunde. Dieser Tarif kann über die Verbindungsdauer (bis zu 4 Teiltarife sind mit unterschiedlichen Gebührenwerten pro Sekunde möglich) zyklisch, nicht zyklisch oder limitiert eingerichtet werden. Der Gebührenwert für die Basic Communication Charge ist keine Fließkommadarstellung.

In diesem Fall kann nur ein Wertebereich von 99,9999999 bis 0,0000001 angegeben werden.

### 2.2 Laden der Tarife·

Für eine größere Effizienz der internen Meldungsschnittstelle, d.h. für kürzere Meldungen zwischen Central Processor und Gruppenprozessor wird vermittlungstellenintern ein Zeigerverfahren (Zeiger='Zone') angewendet. Fur die spätere Signalisierung des ermittelten Tarifes durch den CP an den GP muß dann vom Central Processor nur die Zone, nicht jedoch der gesamte Tarif übertragen werden. Daher werden die administrierten Tarife beim Neuladen der LTG (bzw. bei Recovery größer als Stufe 2.1) als interne Tariftabellen in den GP geladen.

Sollte ein Tarif im aktiven Betrieb geändert bzw. erweitert werden, so wird nur die im GP betroffene Tariftabelle modifiziert.

### 2.3 Tarif-Auswahl

Wird eine Verbindung aufgebaut, so wird der vom Central Processor aufgrund verschiedener Daten ermittelte Tarif-Zeiger in einer internen Meldung (Command:SET-UP-Connection) zum GP übertragen. Mit diesem Tarifzeiger (Zone) wird die entsprechende Tariftabelle für die Vergebührung ausgewählt.

Konnte aus bestimmten Gründen kein Tarif ermittelt werden, weil z.B. eine andere VST für die Tarifermittlung zuständig ist, so wird vom CP 'Zoning in higher exchange', signalisiert und die Tariftabellen werden nicht ausgewertet. Die Gebühren werden in diesem Fall Transparent über entsprechende Meldungen von der Fremd-Vst. empfangen. In diesem Fall ist es dann möglich, daß die Gebühren-Registrierung und -Anzeige in unterschiedlichen Vermittlungsstellen erfolgt.

### 2.4 Gebührenberechnung

Bei Verbindungsende bzw. bei Ablauf interner Zeitgeber, die eine Zwischenspeicherung der Gebühren veranlassen, wird eine interne Gebührenmeldung zum CP gesendet. Diese enthält für das hier zu beschreibende Verfahren folgende gebührenrelevante Informationen:
* ermittelte sekundengenaue Gebühren, die ggf. ausgegeben wurden,
* Charge Status (beschreibt, ob die Verbindung im aktiven Zustand war),
* Zeitstempel (beschreiben Beginn- bzw. Endezeit der Verbindung),
* Verbindunsdauer in Sekunden.

Diese Daten können später im Postprocessing des Netzbetreibers bei Erstellung der Teilnehmerrechung direkt verarbeitet werden.

### 2.4.1 Prinzip der Berechnung sekundengenauer Telekommunikations-Gebühren für direkt abrechenbare Dienstleistungen (siehe Abbildung 1)

Bei CONNECT wird die Setup-Charge, die Minimum-Charge und falls vorhanden die FAU-Charge (FAU = Facility usage = Leistungsmerkmal-Nutzung) fällig. Desweiteren wird der Timer für AOC-D gestartet und der Zeitstempel für die Berechnung der AOC-Ausgabe gesetzt, d.h. gespeichert.

Bei jedem Ereignis, das eine Gebührenberechnung auslöst (in Abb.1 ist nach CONNECT der Timerablauf der AOC-D das genannte Ereignis), wird die Gebühr für das letzte Gesprächsintervall (Gesprächsdauer zwischen dem letzten vorherigen Ereignis, hier CONNECT, und dem Timerablauf (hier 10 Sekunden)) berechnet. Die Gesprächsdauer wird dabei aus der Differenz zwischen dem gespeicherten Zeitstempel und einem neuen Zeitstempel, der das Auftreten des Ereignisses markiert, gebildet. Die berechnete Gebühr wird zu der zuletzt ausgegebenen Gebühr addiert, und der bisherige Zeitstempel durch Abspeicherung des genannten neuen Zeitstempels (nächster Zeitstempel) ersetzt.

Kommt es nun zwischen den Timerabläufen zu einer Tarif-Umschaltung (in Abb.1 Ablauf des Duration-Timers), so wird die Berechnung der Gebühr für die Zeitdauer vom letzten Zeitstempel bis zur Tarif-Umschaltung mit dem letztgültigen Tarif durchgeführt (Zeitdauer wird wieder durch Differenzbildung des gespeicherten Zeitstempels mit dem neuen Zeitstempel berechnet). Beim darauffolgenden Ablauf des Ausgabe-Timers wird die Gesprächsgebühr mit Hilfe der Rest-Zeit und des neuen Tarifes berechnet.

Da es bei der genannten Gebührenberechnung nur auf die Differenz der genannten Zeitstempel ankommt, können die Zeitstempel z.B. durch Ablesen eines vom Betriebssystem verwalteten Ringzählers, der auf Sekundenbasis weitergezählt wird, gewonnen werden. Damit bedürfen Monats- und Jahreswechsel keiner gesonderten Berücksichtigung.

### 2.5 Gebührenausgabe

Pro Verbindung, interaktiv durch den Teilnehmer während der Verbindungsanforderung oder permanent in der Teilnehmerdatenbasis eingerichtet, erfolgt die Anforderung der Ausprägung der Gebührenausgabe. Diese Wahlmöglichkeit - interaktiv oder permanent - ist vorteilhaft für den Teilnehmer, der Gebühren nur fallweise für direkt abrechenbare Dienstleistungen benötigt.

Derzeit erfolgt die Gebührenanzeige nur bei dem die Verbindung initiierenden Teilnehmer (A-Teilnehmer). Die Gebührenanzeige für das hier zu beschreibende Verfahren ist nur mit DSS1 Protokoll möglich, was entsprechende ISDN-Endgeräte zur Verarbeitung der übertragenen Gebühren voraussetzt. Folgende AOC-Funktionen stehen zur Verfügung.
* AOC-S: Tarifanzeige am Beginn bzw. auch bei Tarifwechsel und Nutzung eines gebührenpflichtigen Leistungsmerkmals (Features) während der Verbindung,
* AOC-D: momentan aufgelaufene Verbindungsgebühr während der Verbindung,
* AOC-E: Summe der Verbindungsgebühren am Ende der Verbindung.

### 2.5.1 AOC at Call Setup (AOC-S)

Der AOCS Supplementary Service gestattet dem Teilnehmer, Tarif- und Preisinformationen über die in Anspruch zu nehmenden Telekommunikationsdienstleistungen zu empfangen. Diese Informationen werden dem Teilnehmer zu Beginn der Verbindung als auch bei Tarifänderungen während der Verbindung bereitgestellt.

Die Tarifkomponenten
- Verbindungsversuchs-Aufbau-Gebühr ("Call Attempt Charge"),
- Verbindungs-Aufbau-Gebühr ("Call Setup Charge"),
- Kommunikationsgebühr ("Basic Communication Charge"),
- Nutzungsgebühr für Leistungsmerkmale ("Facility Usage Charge") werden in der CONNECT-Meldung des ISDN DSS1-Protokolls zum Teilnehmer gesendet.

### * Call Attempt Charge

Kommt die Verbindung nicht zustande (z.B. User busy), so wird dem User die Call Attempt Charge (Verbindungsversuchs-Aufbau Gebühr) verrechnet. Die AOC-S Anzeige besitzt in diesem Fall nur das Call Attempt Charge

### * Call Setup Charge

Diese Verbindungsaufbaugebühr (für die Nutzung der Netzressourcen zum Verbindungsaufbau) wird nur bei CONNECT verrechnet und angezeigt.

### * Basic Communication Charge

Das Element für diese Anzeige beinhaltet den Tarif des Gespräches (Gebühren für eine Sekunde). Bei einem zeitunabhängigen Tarif (Blocktarif) wird nur der Betrag, ohne eine Zeiteinheit angezeigt.

### * Facility Usage Charge

Aktiviert der Teilnehmer Leistungsmerkmale (Features), die gebührenpflichtig sind, so sind die dafür anfallenden Gebühren in diesem Element enthalten.

Die einzelnen Elemente enthalten neben dem Betrag und der Zeitangabe auch einen Währungs-String. Dieser Währungs-String wird pro Vermittlungstelle dem Gruppenprozessor über spezifische Programmschalter eingegeben und ist für die gesamte Vermittlungsstelle gültig.

### 2.5.2 AOC Cumulative During the Call (AOC-D)

Der AOCD Supplementary Service gestattet dem Teilnehmer während der Verbindung Gebühren-Informationen für bereits in Anspruch genommene Telekommunikationsdienstleistungen zu empfangen und damit die Höhe der angezeigten Gebühren exakt zu verfolgen.

Diese Informationen, dessen Besonderheit hier in der Sekundengenauheit der Gebührenanzeige und -verrechnung bestehen, werden während der Verbindung und zum Ende der Verbindung bereitgestellt. Zusätzlich können solcherart Informationen bei außergewöhnlichen Verbindungszuständen, wie z.B. bei Benutzung von 'Terminal Portability' (Ein- und Ausstecken des Gerätes während des Gespräches) übertragen werden.

Die momentan aufgelaufenen Gesprächsgebühren für die Anzeige werden dem Teilnehmer in einer Facility-Meldung übermittelt. Sofort nach CONNECT kommt es zur ersten AOC-D Ausgabe. Diese beinhaltet als Gesprächsgebühr die ggf. die Minimum Charge und falls eingerichtet die Call-Setup-Charge. Über VST spezifische Parameter kann gesteuert werden, ob die Gesprächsgebühr inclusive Facility Usage Charge angezeigt wird oder nicht.

Die Steuerung für die AOC-D Ausgabe erfolgt über einen parametrierbaren Timer (derzeit eingestellt auf 10 Sekunden). Bei Ablauf des Timers wird überprüft, ob sich der Betrag geändert hat bzw. ob eine Gebühren-Mindestdifferenz von z.B. 5 Pfennigen überschritten worden ist. Wird diese Differenz nicht überschritten, so kommt es zu keiner Ausgabe,um die Meldungsschnittstelle zum Teilnehmer-Endgerät zu entlasten. Wird diese Differenz überschritten, so kommt es zu einer Ausgabe.

Am Ende des Gesprächs wird dem Teilnehmer über die Auslösemeldung die AOC-D Anzeige übertragen. Diese beinhaltet den Gesamtbetrag des Gespräches.

### 2.5.3 AOC at the End of a Call (AOC-E)

Der AOC-E Supplementary Service gestattet dem Teilnehmer hier, sekundengenaue Informationen über die insgesamt während der Verbindung angefallenen Gebühren zu empfangen, womit das ISDN-Endgerät des Teilnehmers diese Information dann direkt in z.B. eine Hotelrechnung übernehmen kann. Die AOC-E Information wird dem Teilnehmer-Endgerät mit der ersten Auslösemeldung geschickt. Sie beinhaltet den Gesamtbetrag der aufgelaufenen Gebühren für die Verbindung. Wie bei AOC-D kann auch hier gesteuert werden, ob die Facility Usage Charge inclusive Verbindungsgebühren, oder nur die Verbindungsgebühren angezeigt werden. Über VSt spezifische Parameter kann auch gesteuert werden, ob die Gebühren für die einzelenen "User to User Signalling" Nachrichten (Messages) zu den Verbindungsgebühren addiert werden. Diese Option kommt nur für AOC-E zur Anwendung.

### 2.5.4 Zusätzliche AOC-Funktionalitäten für das Zusammenwirken mit anderen Leistungsmerkmalen (Features)

### * Terminal Portability (TP: Ein- und Ausstecken des Endgerätes während der Verbindung):

Erfolgt während der TP-Phase eine Tarif-Umschaltung, so wird dem User beim Resumen (Wiederverbinden) der aktuelle Tarif in einer AOC-S Anzeige übertragen.

### * Große Telefonkonferenz:

Hier werden dem User, der die Konferenz einberufen hat, die Summe der einzelnen Gebühren von allen Konferenzteilnehmern angezeigt.

### * Call Forwarding (CF: Verbindungsumleitung):

Um das Feature AOC-E bei CF nutzen zu können, muß beim umlenkenden Teilnehmer B-Seite) die Berechtigung permanent eingerichtet sein. Wird nun die umgelenkte Verbindung ausgelöst, so werden die Gebühren-Informationen für die umgelenkte Teilstrecke dem umlenkenden Teilnehmer angezeigt.

### * Call Hold (Halten der Verbindung zur Annahme anderer Verbindungen):

Für jede gehaltene Verbindung werden dem A-Teilnehmer die Gebühren einzeln zugestellt. Es ist Sache des ISDN-Endgerätes, die einzelnen Gebühreninformationen über die Call Referencen den jeweiligen Verbindungen zuzuordnen.

### 2.6 Einbettung in das System EWSD

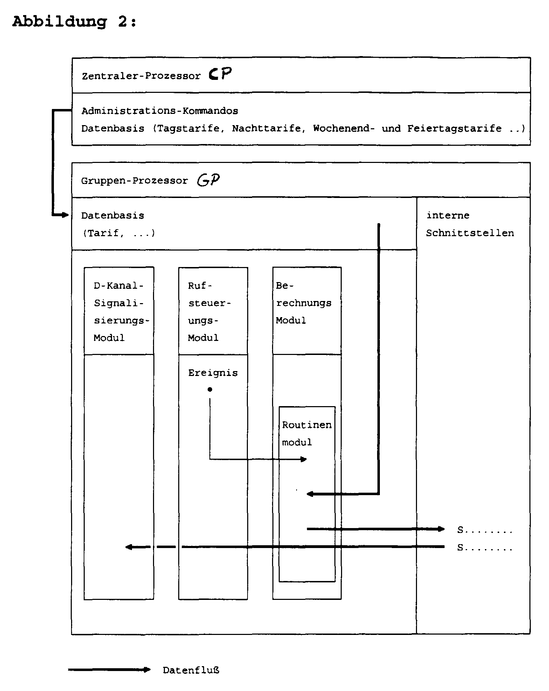

Sämtliche Tarife werden bei deren Einrichtung und Änderung den sogenannten Gruppenprozessoren in der Datenbasis zur Verfügung gestellt, welche Verbindungsaufbau, Verbindungsabbau und Gebührenermittlung, Gebührenausgabe, Gebührenspeicherung steuern (siehe Abbildung 2).

Zum Start der Vergebührung ruft die Verbindungssteuerung bestimmte Rechenroutinen auf, die Tarife aus der Tarifdatenbasis in sekundengenaue Gebühreninformationen umsetzen, diese speichern und über interne Schnittstellen an das D-Kanal - Signalisierungsmodul übergeben, von wo sie dann zum Teilnehmer über den D-Kanal ausgegeben werden.

Verschiedene Ereignisse in der Verbindungsaufbauphase bzw. während der Verbindung initiieren die Gebührenermittlung. Ereignisse, durch die Abläufe initiiert werden (bei denen Gebührenermittlungsroutinen, d.h. AOC-Routinen aufgerufen werden), können sein:

### * Aufbau der Verbindung:

- bei erfolgreichem Aufbau in der Meldung CONNECT,
- bei nicht erfolgreichem Aufbau in der Meldung DISCONNECT.

### * Wahrend der Verbindung:

- sofort nach der Meldung CONNECT,
- bei interner Tarifumschaltung,
- bei externer Tarifumschaltung,
- bei Ablauf des Anzeigeintervall-Timers (hier T3AG).

### * In der Terminal Portability-Phase:

- bei Eintreffen der Meldung SUSPEND,
- bei Eintreffen der Meldung RESUME.

### * Auslösen:

- bei Eintreffen der Meldungen DISCONNECT oder RELEASE,
- bei hartem Auslösen (Hard-RELEASE).

### * Bei einem Verbindungsaufbau mit mehreren Teilnehmern (Große Konferenz):

- bei Eintrefffen der Meldung BEGIN KONFERENZ,
- bei Eintrefffen der Meldung SPLIT KONFERENZ.

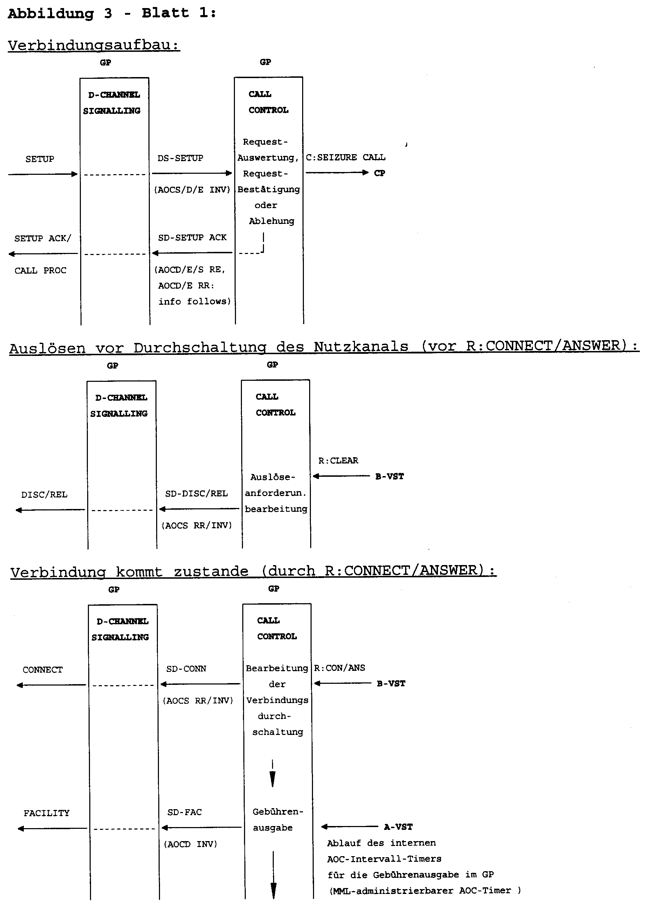

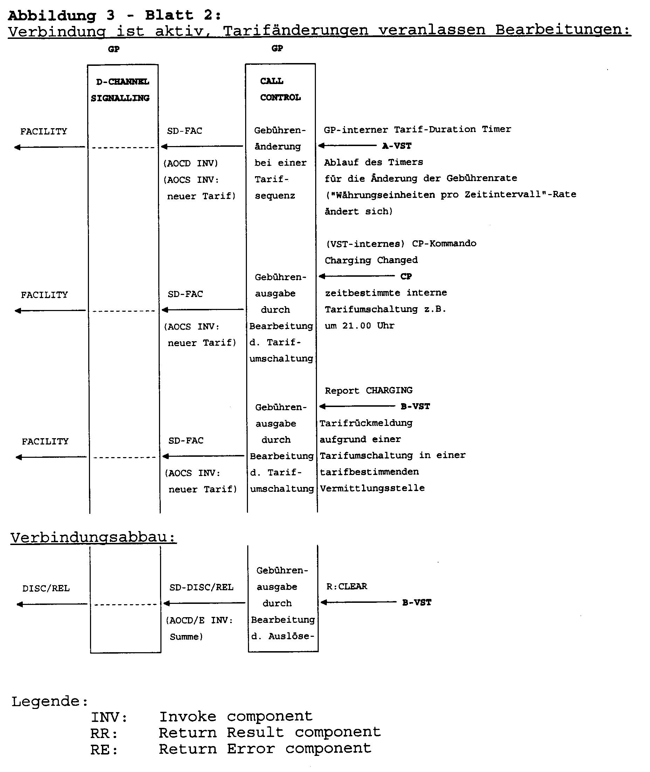

### 2.6.1 Beispiel eines Meldungsflusses für AOC mit dem funktionalen ISDN-Protokoll beim Basic Call (siehe Abb. 3)

### Aktivierung durch Teilnehmer-Anforderung (User-Request)

Die RR für AOC-D und AOC-E sind bereits in der ersten Rückwärtsmeldung (info follows) enthalten, so daß in allen Folgemeldungen, in denen AOC-D/E Ausgaben erforderlich sind, immer INV gesendet werden. Für AOC-S wird vor CONN ermittelt, ob noch ein RR ausständig ist. In diesem Fall wird ein RR gesendet, sonst ein INV. Spätestens aber in der CONN wird ein RR für AOC-S generiert, so daß nach CONN nur mehr AOC-S INV gesendet werden.

### Aktivierung in der Teilnehmerdatenbasis permanent:

Es werden bei allen AOC-Optionen (AOC-S, AOC-D und AOC-E) nur mehr INV's generiert und keine RR. Bei AOC-D/E entfällt die erste Rückwärtsmeldung (info follows). Sollten die AOC-Berechtigungen bereits permanent aktiviert worden sein und es kommt vom User ein AOC-Request, so wird ihm dieser quittiert.

Die Information "free of charge" für AOC-S wird in der CONNECT ausgegeben, auch wenn diese Information schon früher bekannt ist (etwa durch Zonenrückmeldung),, da der User sonst unter Umständen nachfolgend widersprechende Gebühreninformationen erhält.

Unter welchen Bedingungen eine Ausgabe erfolgt und was ausgegeben wird, entscheiden die entsprechenden Routinen des Berechnungsmoduls.

### 3. Aufnahme der Gebühren in das Ticket

Zur späteren Verarbeitung der VST-intern berechneten, vebindungsrelevanten Gebühren werden Datensätze, sogenannte AMA-Datensätze erzeugt und dem Betreiber in zyklischen Abständen übertragen. Empfangen und verarbeitet werden diese Datensätze im VST-externen Billing-Center im Postprocessing des Betreibers.

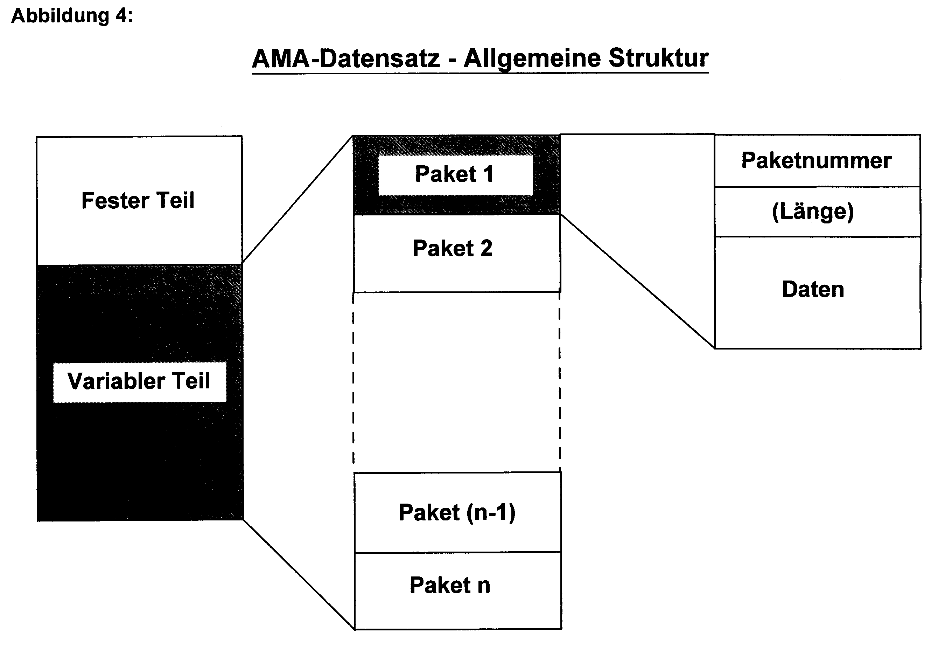

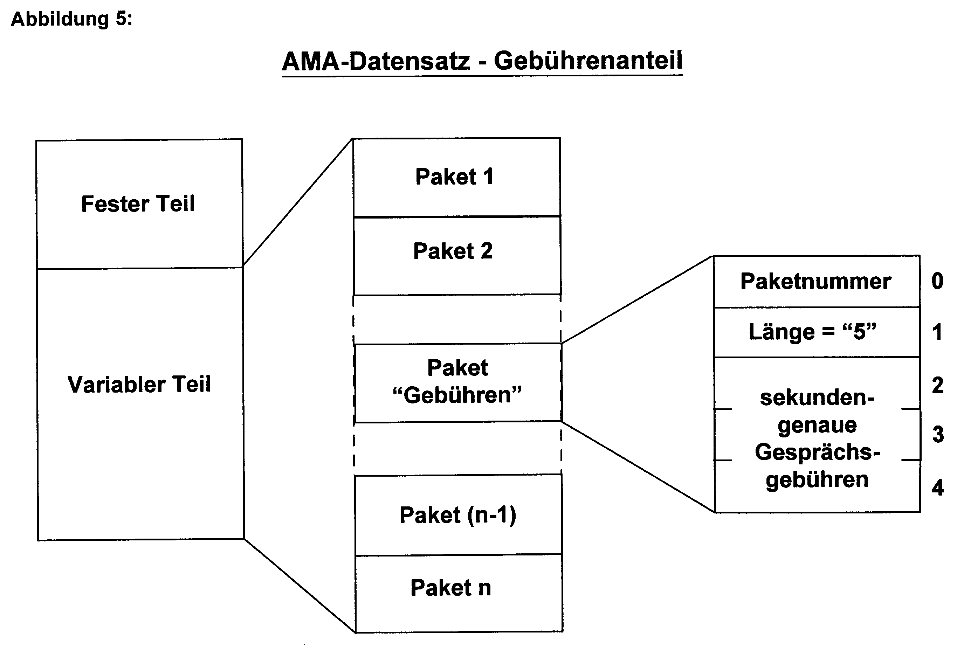

Ein AMA-Datensatz besteht i.a. aus einem festen und einem variablen Teil (siehe Abbildung 4). Der variable Teil besteht wiederum aus mehreren Paketen mit verschiedenen verbindungsrelevanten, aufgezeichneten Informationen. In eines dieser Pakete werden die verbindungsbezogenen ermittelten Gebühren geschrieben, um zum externen Billingsystem des Betreibers übertragen zu werden (siehe Abbildung 5). Die verbindungsbezogenen ermittelten Gebühren bestehen aus zeitdauerabhängigen Gebühren, die auf Sekundenbasis ermittelt werden und ggf. aus verbindungsrelevanten zeitdauerunabhängigen facility usage Gebühren.

Die Postprocessing-Software dieses Billing-Centers kann so direkt die in der VST ermittelten verbindungsrelevanten Gebühren für die Teilnehmerrechnung verarbeiten. Dadurch wird praktisch eine Integration netzinterner Billingsysteme der VSTn und des Postprocessings netzexterner Billingcenters erreicht.

### Legende:

- AOC:: Advice of Charge (Gebührenanzeige)
- AOC-S:: AOC at call setup time
- AOC-D:: AOC cumulative during the call
- AOC-E:: AOC at the end of a call
- INV:: Invoke component im DSS1-Protokoll
- RR:: Return Result component im DSS1-Protokoll
- RE:: Return Error component im DSS1-Protokoll
- VST:: Vermittlungsstelle

## Patentansprüche

1. Verfahren zur Vergebührung von Kommunikationsdiensten, demgemäß die für die Gebührenanzeige in einem Netzknoten verbindungsbezogen berechneten Gebühren in einen Gebührendatensatz aufgenommen werden, der zur späteren Gebühren-Verrechnung herangezogen wird.

2. Verfahren zur Vergebührung von Kommunikationsdiensten, demgemäß die für einen Kommunikationsdienst in einem Netzknoten verbindungsbezogen berechneten Gebühren sowohl für die Gebührenanzeige als auch für die spätere Gebühren-Verrechnung verwendet werden.

3. Verfahren nach Anspruch 1,
**dadurch gekennzeichnet,** daß
die Gebühren-Verrechnung der sekundengenau in der VST ermittelten Gebühren von einem externen Billing-System anhand des genannten Gebührendatensatzes durchgeführt wird.

4. Verfahren nach Anspruch 1,
**dadurch gekennzeichnet,** daß
die Gebühren-Verrechnung in der Vermittlungsstelle anhand des genannten Gebührendatensatzes durchgeführt wird.

5. Verfahren nach einem der Ansprüche 1 bis 4,
**dadurch gekennzeichnet,** daß
diejenigen für einen Kommunikationsdienst anfallenden Gebühren, die zeitdauerabhängig sind, auf Sekundenbasis berechnet werden.
